# EUROPEAN PATENT APPLICATION

(11) **EP 0 617 268 A1**
(43) Date of publication of application: **28.09.1994**
(21) Application number: 93830326.0
(22) Date of filing: 23.07.1993
(51) Int. Cl.: G01L 19/12, G01L 9/00

(54) **High-sensitivity and accuracy pressure meter**

(30) Priority: 26.03.1993 IT MI930589
(71) Applicant: Gallone, Cesare, Camberley, Surrey (GB)
(72) Inventor: Gallone, Cesare, Camberley, Surrey (GB)
(74) Representative: Righetti, Giuseppe

(57) **Abstract**

In a pressure meter, actuation of a microswitch (7) takes place upon command of a movable element (11) having a plate-like conformation, disposed in a plane parallel to a base wall (15) being part of a support structure (2) carrying the microswitch (7). Interposed between the movable element (11) and base wall (15) is a plenum chamber element (16) consisting of two polyethylene layers (16a, 16b) heat sealed along their edges (16c), inside which a branching chamber ("C") is defined which communicates with the environment the pressure variations of which are to be checked. Pressure variations in the environment to be checked cause, when a given threshold is overcome, the displacement of the movable element (11) in a direction opposite to that resulting from the action of its own weight and an optional preloading spring (14), so that the microswitch (7) is operated.

## Description

The present invention relates to a high-sensitivity and accuracy pressure meter, of the type comprising: a support structure: a switching member engaged to the support structure and operatively associated with a signalling circuit for selectively switching over said circuit from a first use condition to a second use condition and vice versa; transducer means put into fluid communication with an environment to be checked so that, upon pressure variations in the environment itself, switching-over of the signalling circuit between the first and second use conditions is caused upon command of the switching member.

In particular, the pressure meter in reference is designed to be used when very low pressure variations need to be detected in environments in which the actual pressure, that is the detectable difference in pressure relative to the surrounding atmosphere is very limited too, in the range of 0.05 to 3 millibar.

It is known that pressure meters generally provide the use of a switching member, usually consisting of a microswitch engaged to a support structure and operable upon command of transducer means put into fluid communication with an environment to be checked for the purpose of causing, following pressure variations in said environment, switching of the operating state of an electric signalling circuit connected to the microswitch. In particular, the transducer means usually comprises a diaphragm made of elastomeric material, sealingly engaged on the periphery thereof to an appropriate support structure so that the opposite faces of said diaphragm respectively communicate with one environment which is generally the environment the pressure of which is to be checked, and a second environment which is generally the outside atmosphere.

Thus the diaphragm is subjected to elastic deformation as a result of variations in the differential pressure taking place between the two environments.

The deformations in the diaphragm give rise to an axial displacement of a transducer rod slidably guided in the support structure and acting on the microswitch so as to cause switching of the operating state of the electric circuit when the differential pressure exceeds a predetermined threshold.

The foregoing being stated, it is to be pointed out that the use of the above described pressure meters brings about several problems and difficulties in those cases in which switching of the electric circuit is required following very low variations in the differential pressure, even in those environments in which the gauge pressure is only marginally higher than the pressure of outside atmosphere. This situation takes place for example when a pressure meter is to be associated with a flue of a boiler or the like in order to give an alarm signal and/or to control the boiler turning off, should the exhaust gas pressure increase beyond a predetermined limit, in the case of an accidental obstruction of the flue, for example.

Under situations of the above kind where the pressure meter must be capable of detecting pressure variations in the order of millibar fractions, inertias due to the elastic strength and weight of the diaphragm as well as to the passive resistances and weight of the components connecting the diaphragm to the microswitch, create important hindrances to the achievement of the desired operating features. Practically, even if diaphragms having a great surface extension and a very reduced thickness are used, which diaphragms are very resilient but on the other hand have problems as regards brittleness and porosity, it is impossible to achieve satisfactory results with the use of a pressure meter, in terms of sensitivity, accuracy and reliability in operation.

In addition, it is noted that diaphragms made of elastomeric material are subjected to modify their modulus of elasticity as a result of the natural aging of the material of which they are made thereby jeopardizing the pressure meter calibration.

The main object of the present invention is to obviate the problems of the known art, by providing a pressure meter which exhibits greatly improved features as regards sensitivity, accuracy and reliability in operation with respect to conventional diaphragm pressure meters and which, at the same time, is of very simple construction so that costs for manufacturing it can be very reduced.

The foregoing and further objects that will become more apparent in the following description are substantially attained by a high-sensitivity and accuracy pressure meter, characterized in that said transducer means comprises: at least one movable element having a plate-like conformation, disposed in a plane parallel to a base wall of the support structure and operatively connected to said switching member; at least one plenum chamber element made of flexible material and internally defining a branching chamber hermetically isolated from the outside atmosphere and communicating with the environment to be checked, said plenum chamber element being operatively interposed between said base wall and movable element, in order to move said movable element away from the base wall and cause the intervention of the switching member following variations in the inner volume of the plenum chamber itself, as a result of pressure variations in the environment to be checked.

Further features and advantages will better be understood from the detailed description of a preferred embodiment of a high-sensitivity and accuracy pressure meter in accordance with the present invention, given hereinafter by way of non-limiting example with reference to the accompanying drawings, in which:

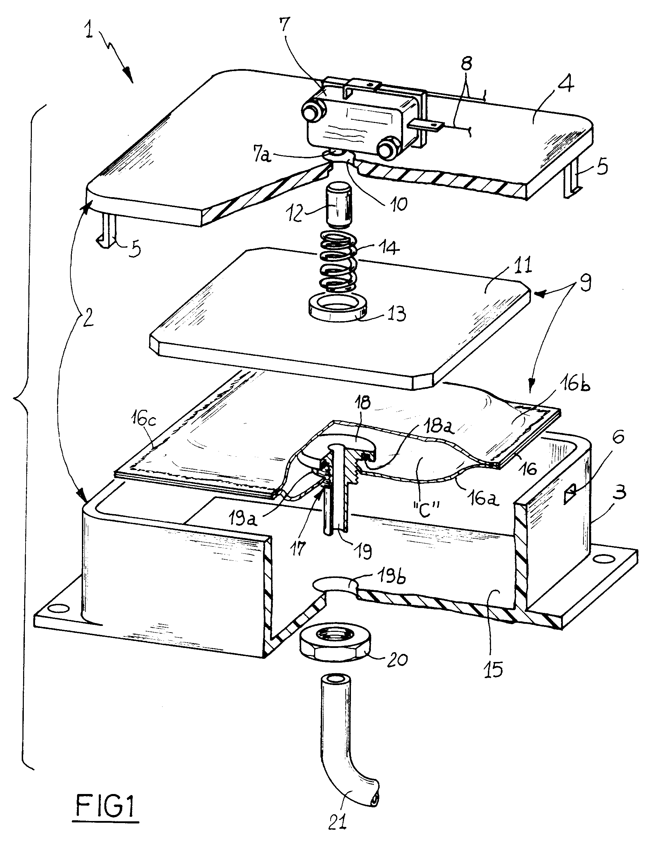

- Fig. 1 is an exploded perspective view of the pressure meter in reference;
- Fig. 2 is a transverse sectional view of the pressure meter in question.

Referring to the drawings, a high-sensitivity and accuracy pressure meter in accordance with the invention has been generally identified by reference numeral 1.

The pressure meter 1 comprises a support structure 2 designed to be fastened to any supporting table. In the embodiment show, the support structure 2 is substantially defined by a box-shaped body 3 closed at the top by a cover 4 provided with engagement tabs 5 to be snap fitted into corresponding seatings 6 defined in the side walls of the box-shaped body.

Rigidly engaged to the support structure 2 is a switching member 7 operatively associated with a respective signalling or control circuit 8. More particularly, in the embodiment shown the switching member 7 consists of a microswitch fastened to the cover 4 and interlocked to the signalling circuit 8 in order to selectively change it over between a first use condition to which for example the absence of current flow through the circuit may correspond, and a second use condition in which the passage of a current flow is produced in order to signal a state of alarm to known and conventional devices (which therefore are not herein shown) connected to the electric circuit 8 itself.

For certain applications, provision may be made for a pneumatic switching valve member and respective fluid-operated circuit or equivalent means, in place of the microswitch 7 and respective electric circuit 8.

The activation of the microswitch 7 takes place upon command of transducer means 9 housed in the box-shaped body 2 and arranged to act on a push-button element 7a being part of the switch and oriented towards the inner part of the box-shaped body 2 through an opening 10 formed in the cover 4.

In accordance with the present invention, the transducer means 9 essentially comprises at least one movable element 11 having a plate-like conformation, preferably made of foam polystyrene material or any other material suitable for achieving a sufficient structural stiffness with a relatively low weight. The movable element 11 is disposed parallel to a base wall 15 of the box-shaped body 3 and operatively connected to the push-button element 7a of the microswitch 7, possibly by means of an auxiliary rod 12 extending perpendicular to a base plate 13 fastened to the movable element itself, for example by gluing. A preloading spring 14 may be optionally interposed between the plate 13 and cover 4 of the support structure 2 in order to push the movable element 11 away from the microswitch 7 at a given preloading force.

Still in accordance with the present invention, at least one plenum chamber element 16 made of flexible material is interposed between the movable element 11 and base wall 15 of the box-shaped body 3, said plenum chamber element internally defining a branching chamber "C" hermetically isolated from the outside atmosphere and communicating, as better specified in the following, with the environment the pressure variations of which are to be checked.

In a preferential solution, the plenum chamber element 16 is substantially formed with at least one polyethylene (or similar flexible material) sheet or tubular element of a thickness in the range of 0.02 to 0.1 mm, folded over according to respectively superposed first and second layers 16a, 16b sealed with each other by a heat seal 16a along the respective perimetric edges.

Associated with the plenum chamber element 16 is a connecting member 17 accessible from the outside of the box-shaped body 3 for enabling connection between the branching chamber "C" and the environment to be checked. Said connecting member 17, put into the plenum chamber element 16 before heat seals 16c are made along the perimetric edges of said layers, is essentially provided with a disc-shaped flange 18 from which a tubular portion 19 extends at right angles thereto, which tubular portion 19 passes through the first layer 16a of the plenum chamber element 16 and the base wall 15 of the box-shaped body 3 through corresponding access openings 19a, 19b. A stop nut 20 is screwed down on the tubular portion 19 outside the box-shaped body 3 and acts on the base wall 15 thereof so as to make the disc-shaped flange 18 act in an opposing relationship with the base wall 15 in order to exert a hermetic seal around the access opening 19a of the first layer. For the purpose of ensuring a perfect tightness around the access opening 19a, an O-ring 18a may be provided which is engaged to the disc-shaped flange 18 and acts on the first layer 16a of the plenum chamber element 16.

The tubular portion 19 is designed to be connected to the environment to be checked, for example by a flexible hose 21 partly shown.

Operation of the pressure meter according to the invention described above mainly as regards structure is as follows.

Pressure existing in the environment to be checked is transmitted to the branching chamber "C" defined in the plenum chamber element 16. The action of said pressure tends to increase the inner volume of the plenum chamber element 16 moving the first and second layers 16a, 16b apart from each other. The action exerted by pressure is transmitted over the whole surface extension of the movable element 11 in a resting relationship on the second layer 16b of the plenum chamber element 16b.

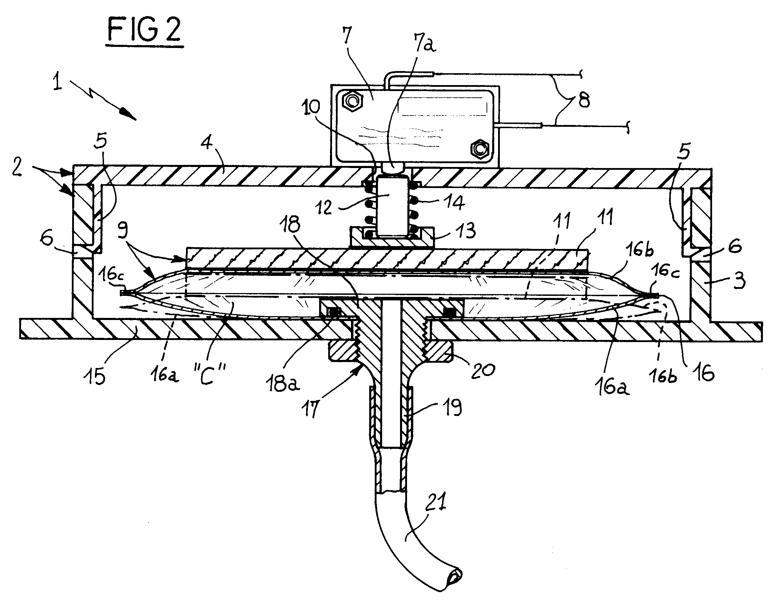

When the pressure value is held below a predetermined threshold, the weight of the movable element 11 and/or the action exerted by the counterspring 14 are sufficient to keep the second layer 16b of the plenum chamber element 16 close to the first layer 16a as shown in dotted line in Fig. 2. When, on the contrary, pressure overcomes the predetermined threshold, the action that said pressure exerts on the surface of the movable element 11 wins the weight proper to said element and/or the action of the counterspring 14, causing the displacement of the second layer 16b and the movable element itself away from the base wall 15 of the box-shaped body 3, as shown in solid line in the accompanying figures. The resulting axial displacement of the auxiliary rod 12 causes the operation of the push-button element 7a of the microswitch 7 and, therefore, the selective switching over of the electric circuit 8 from the first to the second operating condition. The consequent current flow along the electric circuit 8 can be indifferently utilized for producing an alarm signal or triggering the intervention of any safety device interlocked to the pressure meter 1.

The invention achieves the intended purposes.

It will be in fact recognized that, although this pressure meter can be manufactured at very reduced costs by virtue of its simple construction, it has greatly improved features as regards sensitivity and accuracy in operation as compared to conventional diaphragm pressure meters. In particular, the described pressure meter is capable of signalling pressure variations in the order of few millibar hundredths.

Just as an indication it is to be considered the use of a movable element acting on the plenum chamber element over a contact surface in the order of 100 cm² and exerting a force of 2.5 g. The force necessary to actuate the push-button element of the microswitch can be considered 25 g, so that a thrust greater than 27.5 g should be necessarily exerted on the movable element in order to obtain the operating intervention of the pressure meter. In such a case it will be sufficient for the gauge pressure in the checked environment to exceed the value of 0.27 millibar in order to cause the displacement of the movable element and the resulting switching over of the electric circuit by the microswitch.

Obviously the movable element and/or counterspring may have different structure and size depending on the differrent requirements.

Advantageously, if on installation the pressure meter is oriented with the movable element in a horizontal plane above the base wall, the counterspring can be eliminated and the pressure meter can be calibrated, as regards pressure threshold, based on the weight of the movable element itself. In this case, if a microswitch or any other switching element is adopted the operation of which is not dependent on the presence of spring means, a very precise and constant calibration of the pressure meter can be achieved, since it does not depend on the variation of the stiffness coefficient of springs and/or diaphragms as a result of aging.

Obviously modifications and variations may be made to the invention as conceived, without departing from the scope of the appended claims.

## Claims

1. A high-sensitivity and accuracy pressure meter comprising:
- a support structure (2);
- a switching member (7) engaged to the support structure (2) and operatively associated with a signalling circuit (8) for selectively switching over said circuit from a first use condition to a second use condition and vice versa;
- transducer means (9) put into fluid communication with an environment to be checked so that, as a result of pressure variations in the environment itself, switching-over of the signalling circuit (8) between the first and second use conditions is caused upon command of the switching member (7),
characterized in that said transducer means (9) comprises:
- at least one movable element (11) having a plate-like conformation, disposed in a plane parallel to a base wall (15) of the support structure (2) and operatively connected to said switching member (7);
- at least one plenum chamber element (16) made of flexible material and internally defining a branching chamber ("C") hermetically isolated from the outside atmosphere and communicating with the environment to be checked, said plenum chamber element (16) being operatively interposed between said base wall (15) and movable element (11), in order to move said a movable element away from the base wall (15) and cause the intervention of the switching member (7) following variations in the inner volume of the plenum chamber itself as a result of pressure variations in the environment to be checked.

2. A pressure meter according to claim 1, characterized in that said plenum chamber element (16) comprises at least one flexible plastics sheet shaped in such a manner that it forms mutually superposed first and second layers (16a, 16b) acting against said base wall (15) and movable element (11) respectively, said layers (16a, 16b) being heat sealed along respective perimetric edges (16c).

3. A pressure meter according to claim 1, characterized in that it further comprises a connecting element (17) exhibiting a disc-shaped flange (18) disposed within the branching chamber ("C") and a tubular portion (19) externally projecting from said base wall (15) through access openings (19a, 19b) formed in the plenum chamber element (16) and the base wall (15) respectively, said disc-shaped flange (18) acting against the action of the base wall (15) for exerting a sealing action around the access opening (19a) formed in the plenum chamber element (16).

4. A pressure meter according to claim 3, characterized in that the disc-shaped flange (18) acts around the access opening (19a) of the plenum chamber element (16) upon interposition of at least one O-ring (18a).

5. A pressure meter according to claim 1, characterized in that it further comprises at least one preloading spring (14) acting between the support structure (2) and the movable element (11) for urging said element towards the base wall (15).

6. A pressure meter according to claim 5, characterized in that a plate (13) is interposed between said preloading spring (14) and movable element (11), which plate coaxially acts on an auxiliary rod (12) operatively connected to said switching member (7).

7. A pressure meter according to claim 1, characterized in that said support structure (2) comprises a box-shaped body (3) housing the plenum chamber element (16) and movable element (11), as well as a closing cover (4) removably engaged on the box-shaped body (3) and carrying said switching member (7).

8. A pressure meter according to claim 1, characterized in that said switching member (7) comprises a microswitch operating on an electric circuit (8) constituting said signalling circuit.
